# EUROPEAN PATENT APPLICATION

(11) **EP 0 893 065 A2**
(43) Date of publication of application: **27.01.1999**
(21) Application number: 98305132.7
(22) Date of filing: 29.06.1998
(51) Int. Cl.: A23F 5/24, A23F 5/28

(54) **High concentration aromatized liquid coffee extract and liquid coffee made therefrom**

(30) Priority: 25.07.1997 US 900259
(71) Applicant: KRAFT FOODS, INC., Northfield, Illinois 60093 (US)
(72) Inventor: Panesar, Satwinder Singh, Banbury, Oxfordshire OX16 9NR (GB)
(74) Representative: Eyles, Christopher Thomas

(57) **Abstract**

The present invention is directed to a high concentration aromatized liquid coffee extract having a soluble solids concentration greater than 55 % which is to be used in the making of liquid coffee products. Said liquid coffee products possess greater R&G characteristics and improved shelf-life as compared to comparable liquid coffee and instant soluble coffee products available to the consumer. The liquid coffee products of the present invention may be in the form of a liquid, a gel or foam, or in a frozen state having ice cream-like texture.

## Description

### BACKGROUND OF THE INVENTION

### FIELD OF THE INVENTION

The present invention is generally related to the field of coffee, and more particularly to the making of a high concentration aromatized liquid coffee extract to be used in the making of various liquid coffee products for the consumer public. More specifically, the present invention is directed to an aromatized liquid coffee extract comprising greater than 55% soluble solids, said aromatized liquid coffee extract resulting in liquid coffee products made therefrom having an improved shelf-life stability and superior roast and ground (R&G) quality characteristics as compared to other instant (e.g. spray dried powder or freeze dried granules) and liquid coffees. Accordingly, the present invention is further directed to these liquid coffee products made from the high concentration aromatized liquid coffee extract.

The liquid coffee products of the present invention made from the high concentration aromatized liquid coffee extracts may be delivered in the form of a liquid, a foam or gel, or in a semi-frozen state having texture characteristics similar to ice cream. These products, when compared to similar products available to the consumer, all possess a significantly better quality in that the R&G flavor of the product is superior. The products further possess greater shelf-life, greater solubility (both in cold and hot water) and greater cup aroma than comparable products, and are more easier to prepare and use, as well as being less expensive to produce.

### DESCRIPTION OF THE PRIOR ART

Coffee is generally sold to the consumer in two forms: roast & ground and instant soluble. The more traditional roast and ground coffee is extracted via a percolator to produce coffee having a higher quality flavor and aroma as compared to instant soluble coffee. Much to the dissatisfaction of the consumer, however, the preparation of roast and ground coffee is time consuming. The instant soluble coffee, on the other hand, is much more convenient to prepare as the consumer simply needs to add hot water to the coffee powder.

The processing of soluble coffee involves the extraction of roast and ground at high temperature and pressure conditions in a battery of percolators. The resulting dilute extract of 10 to 15% soluble solids is then stripped to remove flavor components prior to its evaporation to higher concentrations (greater than 40% soluble solids). The flavors are subsequently added back to the concentrated extract which is then spray dried or freeze dried to produce the instant soluble coffee. Unfortunately, large amounts of these flavor components are forever lost during the drying process leading to the inferior quality of instant soluble as compared to roast and ground. Although many attempts have been made to improve the flavor retention in the instant soluble coffee during its manufacture, drying processes ultimately result in flavor loss.

Another form of coffee, which has principally found a market in far eastern countries and which has recently been introduced into the U.S. and European markets, is liquid coffee. This form of coffee is ready to drink and is sold in small volumes. The liquid coffee product is generally prepared by mixing a diluted coffee extract of 10 to 15% soluble solids with the desired additives, such as milk, sugar and flavorants. The product is then packaged in a suitable container, such as a can, which can be subjected to retort processing. The result is a liquid coffee product which can be distributed to the consumer. The product can be stored for generally up to six months at room temperature before consumption.

Coffee extract is considered in the coffee industry to be an aqueous solution of soluble solids extracted from the coffee beans. Besides being used in the making of liquid coffee, such as in the present invention, it is more conventionally viewed as an intermediate stage product in the manufacture of both freeze-dried and spray-dried instant coffees. Coffee extracts may also be used directly in flavorings and in certain vending operations. U.S. Patent Nos. 4,983,408 (to Colton), 4,798,730 (to Scoville et al.), 3,536,496 (to Paoloni) and 3,224,879 (to DiNardo) all relate to methods of making coffee extracts and the use of these abstracts in making instant dried coffees. All but the Scoville et al. patent also indicate the use of the coffee extract as a liquid coffee concentrate.

Liquid coffee is somewhat more intriguing than instant soluble coffees in that it may be presented to the consumer in various forms. Perhaps the most widely developed form is simply that of a liquid. The liquid coffee extract or liquid coffee concentrate can be packaged as described above or dispensed in various embodiments. For example, measurable amounts of the extract can be dispensed from an aerosol-type container. By fitting the aerosol container with a foamhead nozzle, the liquid coffee can be dispensed in a liquid gel or foam state. U.S. Patent Nos. 3,119,695 (to Kahan) and 4,752,465 (to Mackles) discuss the dispensing of pressurized liquid, such as coffee concentrate, in the form of a foam or gel.

Still another form of a liquid coffee product is that of a frozen coffee concentrate. Frozen coffee concentrates may be used in vending machines to produce soft-frozen type beverages having ice cream-like texture. Alternatively, the frozen coffee concentrates are used in the production of freeze-dried soluble coffee. For example, see U.S. Patent Nos. 3,492,126 (to Rubenstein), 3,682,650 (to Easton et al.), 4,324,808 and 4,565,706 (both to Wertheim et al.).

The major problem which exists with the marketing of liquid coffee, in any and all the forms mentioned above, is the fact that coffee extract is an unstable system. Both the shelf-stored and refrigerator-stored liquid coffee products currently available develop an increased acidity over a short period of time leading to quality loss in the product. Too low of a pH also results in the possible curdling of the milk or cream. This quality loss of the liquid coffee extract on storage is generally referred to as "staling". Staling leads to sourness in the taste of the product and although the cause of staling is attributed for the most part to the drop in pH and the increase in titratable acidity, no clear explanation or mechanism is known for its occurrence.

H.G. Maier, et al., Dtsch. Lebensmittel-Rdsch. 80(9): 265-268 (1984) have shown that the content of low molecular weight acids increase on storage at elevated temperatures and attributed the increase to the hydrolysis of esters and lactones produced on roasting. Alternatively, it has been suggested that oxidation involving atmospheric oxygen and the formation of carboxylic acids is responsible or that polymeric acids are formed.

One solution which has been used to prevent the problem of sourness development is the addition of sodium bicarbonate to elevate the initial pH of the product. However, the product pH of the sodium bicarbonate-treated liquid coffee product still falls on storage and has additional potential repercussions on product flavor.

In addition to the staling and short shelf-life problem, the quality of frozen coffee concentrates are also highly influenced by the storage and transport of the concentrate. The storage temperature must generally be maintained at -25°C and the physical distribution is done either in isothermal cases or refrigerated trucks at -12°C. This significantly adds to the cost of marketing the product.

Consequently, commercialization of a liquid coffee products at ambient conditions has been hampered to date due to poor flavor quality and stability. Product deterioration is generally indicated by an increase in pruney/sour, astringent character over time.

As indicated above, several concentrated liquid coffee products have been disclosed in the art. However, these products have been constrained to concentrations between 15 to 53% and they exhibit unstable shelf-life characteristics. Products with concentrations greater than 53% have never been investigated, primarily due to their perceived high viscosity.

### SUMMARY OF THE INVENTION

The present invention is directed to a high concentration aromatized liquid coffee extract having a soluble solids concentration greater than 55 % which is to be used in the making of liquid coffee products. Liquid coffee extracts of greater than 55% may be obtained by conventional processes known in the art, however, such extracts have only been used in the making of instant soluble coffees. Liquid coffee extracts having soluble solids concentrations of greater than 55 % have not been used in liquid coffee products as such high concentrations were believed to lead to a poor, and a too viscous, product.

It has been surprisingly found that liquid coffee extracts having soluble solids concentrations of greater than 55 % not only result in consumer acceptable liquid coffee products, but also result in liquid coffee products having greater shelf-life and R&G characteristics than comparable liquid coffee products made with extracts having less than 55% concentration of soluble solids. Due to the higher concentrations of the liquid coffee extracts used to produce the liquid coffee products of the present invention, there is a pronounced decline in the development of acidity in the product over time, leading to a greater shelf-life of the product.

Liquid coffee products in accordance with the present invention include those in the form of a liquid, a gel or foam, and in a semi-frozen state having ice cream-like texture characteristics.

### BRIEF DESCRIPTION OF THE DRAWINGS

FIG. 1 is a graph depicting the change in pH over time of liquid coffee prepared with the high concentration aromatized liquid coffee extract of the present invention as compared to other liquid coffees. The graph also illustrates the effect of storage temperature on the stability of the extract.

FIG. 2 is a graph depicting the total aroma retention characteristics of the liquid coffee products of the present invention as compared to freeze-dried coffee.

FIG. 3 is a graph illustrating the hindering effect the high concentration of soluble solids has on the liquid coffee of the present invention has on bacterial growth at varying temperatures.

### DETAILED DESCRIPTION OF THE INVENTION

The high concentrated aromatized liquid coffee extract used in the present invention may be obtained by any conventional extraction method or technique known in the art. For example, a conventional method for producing soluble coffee products is described in Sivetz and Desrosier, "Coffee Technology" AVI Publishing (1979), wherein roasted and ground coffee is extracted with heated water by a countercurrent method in a percolation set consisting of six extraction columns connected in series. A cycle of extraction begins at the column filled with the most spent R&G coffee and ends at the column filled with the freshest coffee.

During a typical extraction cycle, water at about 150°C to about 170°C is introduced under pressure into the first column, which contains coffee which has already been extracted, and passes through each of the columns, which are connected in series. The extract is drawn off from the last column, containing fresh coffee, where the extraction temperature is about 100°C. The extract which is drawn off is weighed continuously and the cycle is terminated when the desired quantity of extract has been obtained.

Following the extraction cycles, the coffee extract, generally containing anywhere from about 10 to about 20% by weight of soluble coffee solids, is then concentrated by any suitable means, such as by evaporation, until a soluble solids concentration of about 65% is reached. The volatiles obtained from conventional aroma processing techniques are added to the extract to obtain a final concentration of about 55 to about 60% soluble solids. A 60% final soluble solids concentration or greater is preferred. The high concentration aromatized liquid extract can then be packaged in various ways for delivery to the consumer.

One such package, or product, is simply one which provides for the extract to be dispensed as a liquid. For example, the high concentration aromatized liquid coffee extracts may be sold in a conventional container or it may be placed in a metallic/plastic aerosol type container fitted with a pump at the outlet such that measurable dosages of the liquid coffee extract can be dispensed. In such a case, the consumer is to add hot water to the dispensed liquid to obtain a pleasing coffee product.

The aerosol container as described above may alternatively be fitted with a foamhead type nozzle and filled with the liquid coffee extract and a propellant, such as carbon dioxide gas, in order to instigate foaming. More specifically, the liquid coffee is supersaturated with the propellant and is contained in a bag which is enclosed in the aerosol container. The aerosol container is filled with an additional propellant at pressures greater than those within the bag. The additional propellant drives the release of the liquid from the aerosol. The CO₂ supersaturated liquid when released to the atmosphere comes out in liquid/gel form and starts to foam as the gas is gradually released from the liquid.

Still further, a frozen coffee having ice cream-type texture can be made. The high concentrated aromatized liquid coffee extract of the present invention is foamed with nitrogen gas under sufficient pressure and temperature conditions. Foaming is achieved using conventional freeze drying equipment. The foamed extract is packaged into plastic containers and stored at temperatures of about -10 to about -20°C fridge/freezer temperature conditions and exhibits an ice-cream type texture. The frozen coffee may be readily spooned into a cup and can retain its texture for approximately one hour when stored at ambient temperatures.

The following example is provided to further illustrate the present invention.

### EXAMPLE

A blend of 100% Arabica beans was roasted to a 55 roast color, ground coarsely and fed into a percolation process to produce a coffee extract of approximately 15% concentration. The coffee was extracted with heated water by the countercurrent method in a percolation set consisting of six extraction columns connected in series. The columns were divided into two sections: autoclave and fresh, with the autoclave columns being subjected to higher temperatures.

Each column was filled with approximately 660 kg of fresh R&G at a density of 300 g/cu. meter. Hot feed water at 180°C was fed to the initial series of three autoclave columns, with water being introduced from the most spent coffee grounds to the freshest coffee. After passing through the autoclave section, the extract was steam stripped by 10% and was then passed through the fresh columns where the temperature approached 100°C. The inter stage strip was condensed by a heat exchanger and then discarded. The fresh column of coffee was filled with extract from the next to fresh column. After the column was full, the coffee extract was cooled to less than 35°C as it was drawn off. The total weight of the drawn off extract per cycle was 1980 kg giving a draw off factor (DOF) of 3. Each cycle was completed in approximately 35 minutes. The scale extract (at 10 to 15% soluble solids) produced a yield between 45 to 50%.

The extract from the scale tank was then steam stripped by 10% prior to being introduced to an evaporator. The strip was condensed by a heat exchanger and then fed to a distillation column with a feed to distillate concentration of 25:1.

The stripped extract was evaporated in a multiple stage vacuum APV evaporator. The extract at 15% solids was concentrated to approximately 65% solids. The evaporator was operated as a three stage, three effect evaporator with boiling extract maintained at 70°C, 60°C and 50°C as controlled by the vacuum setting for each flash chamber. The first effect was heated by steam. The second and third effects were heated by vapor from the previous effect.

The distillate was added back to the concentrated extract after evaporation. The final concentration of the extract was between 60 to 65% solids.

The high concentration aromatized liquid coffee extract was then packaged in three alternative embodiments. In one embodiment, a plastic aerosol-type container was filled with the 60-65 % liquid coffee extract and fitted with a pump at the outlet in order to deliver measurable dosages of the liquid coffee extract.

In the second embodiment, the liquid coffee extract was supersaturated with carbon dioxide gas at a pressure of 2 bars and contained in a bag enclosed within an aerosol container. The aerosol container was then filled with an additional propellant at a pressure greater than that in the bag. The additional propellant drives the release of the liquid from the aerosol. When the carbon dioxide supersaturated liquid coffee is released to the atmosphere, the gas is gradually released from the liquid/gel form and begins to foam.

In the third embodiment, the 60-65% soluble solids liquid coffee extract was foamed with nitrogen gas at a density less than 500 g/l and at a temperature ranging between -5°C to 5°C. The foamed extract was then filled into a 100ml plastic container and stored at a refrigerator/freezer temperature ranging between -10° to -20°C. The frozen coffee exhibited ice cream-type texture. When spooned into a cup, the product maintained its texture for approximately 1 hour at ambient temperatures.

A sensory evaluation was conducted on the liquid coffee products prepared in Example 1 with the high concentration aromatized liquid coffee extracts of the present invention as compared to a freeze-dried coffee control. Initially, the liquid coffee product of the present invention exhibited better R & G-like flavor than the conventional freeze-dried coffee, and was less bitter and smooth.

All products were then stored for a period of 16 weeks. The results of the comparisons in taste of the liquid coffee product made in accordance with the present invention to that of the conventional freeze-dried soluble coffee are shown in Table 1 below.

**Table 1.**

| Sensory evaluation of product of present invention compared to conventional freeze-dried instant coffee | | | | |
|---|---|---|---|---|
| **Coffee type** | **Freeze Dried Control** | **Liquid Product** | | |
| **Time** | | **Initial taste** | **after 8 weeks** | |
| **Temperature conditions** | | Ambient | 0°C | Frozen coffee (-18°C) |
| **Taste attributes** | not R&G like, | R&G like, less | R&G like, | R&G like, less bitter, |
| | woody, | bitter, smooth | less bitter, | smooth |
| | grainy, | | smooth and | |
| | processed, | | sour | |
| | bitter | | | |

In summary, the liquid coffee product made in accordance with the present invention exhibited much smoother, less bitter and greater R&G-like attributes compared to the freeze dried control. The frozen coffee form showed no change in taste with respect to shelf-life. However, the liquid coffee after 16 weeks at ambient temperature conditions developed some sourness, while at 0°C temperature, exhibited low intensity sour notes.

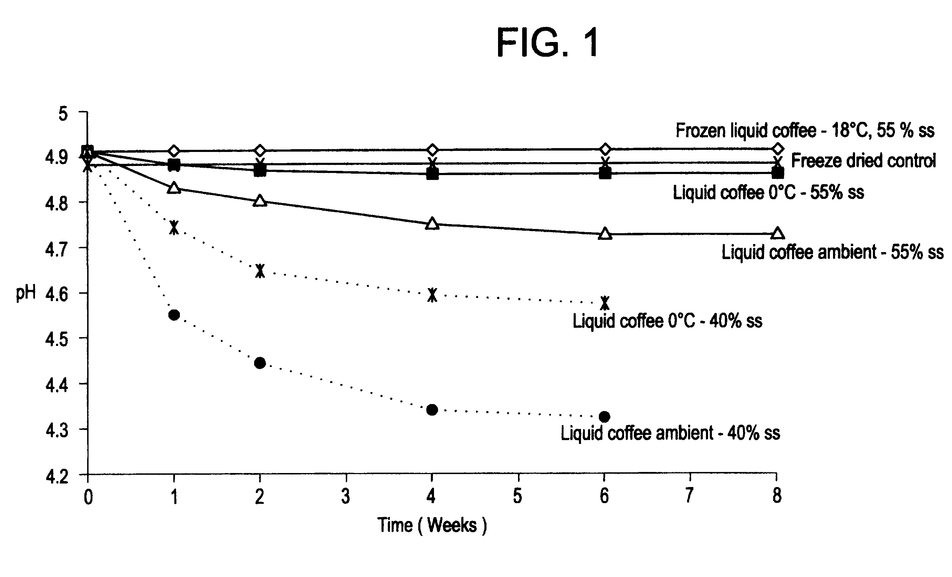

As was stated earlier, the coffee extract is an unstable system and the increase in sourness is related to the increased acidity of the liquid over time. Due to the lesser degree of increased acidity in the liquid coffee products of the present invention, there is a markedly lesser development of sourness in the products over time. This is clearly demonstrated in Figure 1.

As can be seen by the data shown in Figure 1, the pH decline is a function of extract concentration and temperature. Particularly, it has been discovered that the acidity increase or pH decrease gets less pronounced with increasing concentration and decreasing temperature. The increase in content of low molecular weight acids on storage at elevated temperatures has been attributed to the hydrolysis of esters and lactones produced on roasting. Clearly, it is evident that at higher concentrations, such as greater than 55 % soluble solids, water is mostly present in bound form (eutectic) and hydrolysis is inhibited. Thus, the quality loss or "staling" which occurs on storage for conventionally known liquid coffee and soluble coffee products is considerably less for the liquid coffee products of the present invention .

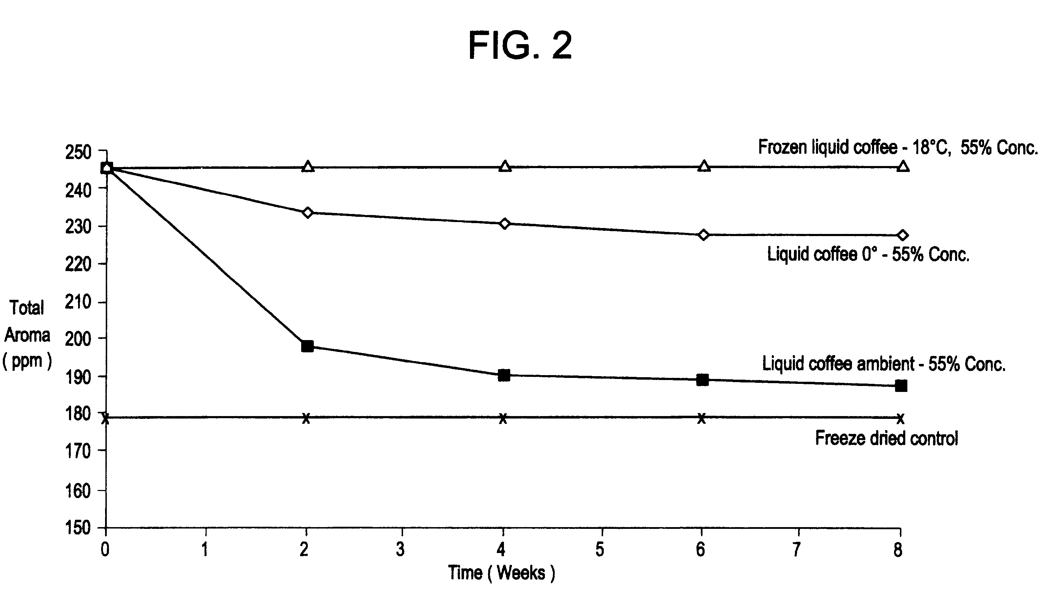

As is shown in Figure 2, it has also been found that the aroma retention for the high concentration aromatized liquid coffee products of the present invention are greater than conventional freeze-dried coffees and thus offers a higher quality flavor to the consumer. Figure 2 illustrates shelf-life stability of aroma retention as a function of temperature, and specifically shows no losses at -18°C for the liquid coffee product of the present invention. At ambient conditions, despite some aroma losses, the overall aroma of the liquid coffee products made in accordance with the present invention were still considerably higher than that of the freeze-dried control.

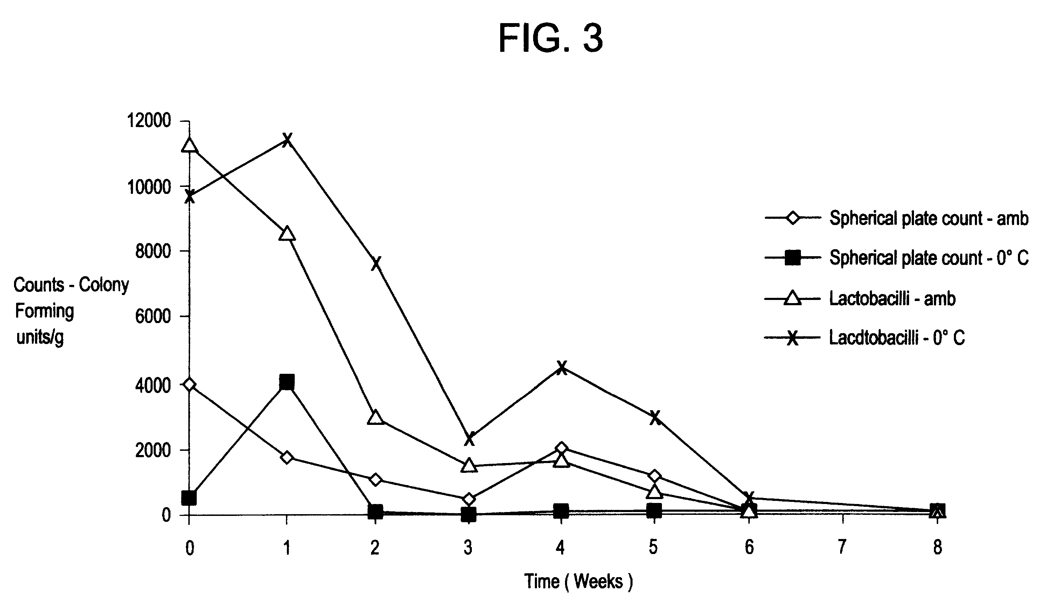

Figure 3 relates to the microbiological stability of the liquid coffee products of the present invention at varying temperature conditions. In order to measure this characteristic, the liquid coffee products of 55 % concentration were inoculated with bacteria. As shown by the data obtained, it is clearly evident that the bacterial activity decreased with time and, in fact, after about five weeks, completely terminated. In essence, the high concentrated aromatized liquid coffee products of the present invention are shelf-life stable from bacterial activity.

It is apparent from the results discussed above that the liquid coffee products made from the high concentration aromatized liquid coffee extracts of the present invention, in liquid, foam/gel and frozen forms, possess better R&G quality than conventional freeze-dried and liquid products, and represent a more convenient product for the consumer to use. In addition, the costs for making the liquid coffee products of the present invention are considerably less than that required by conventional products as less drying is involved in the process (no freeze- or spray-drying required as in the production of instant soluble coffees). Still further, the products of the present invention have a greater cup aroma and better shelf life as compared to the conventional freeze-dried and liquid products, especially with respect to the frozen coffee product form of the present invention.

The above preferred embodiments and examples are given to illustrate the scope and spirit of the present invention. The embodiments and examples described herein will make apparent, to those skilled in the art, other embodiments and examples. These other embodiments and examples are within the contemplation of the present invention. Therefore, the present invention should be limited only by the appended claims.

## Claims

1. A high concentration aromatized liquid coffee extract to be used in the preparation of liquid coffee, said liquid coffee extract having a soluble solids concentration of greater than 55%.

2. The high concentration aromatized liquid coffee extract according to claim 1, wherein said soluble solids concentration is greater than 60%.

3. A liquid coffee product comprising an aromatized liquid coffee extract having a concentration of greater than 55% soluble solids.

4. The liquid coffee product according to claim 3, wherein said aromatized liquid coffee extract has a concentration of greater than 60% soluble solids.

5. The liquid coffee product according to claim 3, wherein said product is in the form of a liquid.

6. The liquid coffee product according to claim 3, wherein said product is in the form of a gel or foam.

7. The liquid coffee product according to claim 3, wherein said product is in frozen form
